# EUROPEAN PATENT APPLICATION

(11) **EP 1 970 304 A1**
(43) Date of publication of application: **17.09.2008**
(21) Application number: 07103927.5
(22) Date of filing: 12.03.2007
(51) Int. Cl.: B64F 1/26

(54) **Mobile sound barriers**

(71) Applicant: Nederlandse Organisatie voor Toegepast-Natuurwetenschappelijk Onderzoek TNO, 2628 VK Delft (NL)
(72) Inventor: Van den Berg, Frank Hendrik Alexander, 2622 AW Delft (NL)
(74) Representative: van Loon, C.J.J.

(57) **Abstract**

A mobile sound barrier (1) is capable of moving along with a moving sound source (7) so as to shield the sound source when moving. The sound source (7) may be an airplane on a runway or a train on a railway. By moving the sound barrier (1) alongside the sound source (7), a sound barrier extending along the full length of the runway or railway is no longer necessary. The mobile noise barrier may be self propelled or propelled by external means (3), such as cables and a stationary motor.

## Description

The present invention relates to mobile sound barriers. More in particular, the present invention relates to a mobile sound barrier for use at runways of airports or along train tracks.

It is well known that airplanes produce a significant amount of noise when taking off. The sound of airplane engines, in particular jet engines, can be very annoying for people living in the vicinity of the airport, especially when the sound is produced at night. For this reason, various types of sound barriers have been proposed.

Prior Art sound barriers (also known as noise barriers) typically consist of a row of panels erected along the runway. German Patent Application DE 1 946 561 discloses an example of a sound barrier made up of plastic panels. Other known sound barriers comprise an earthen wall, as disclosed in British Patent Application GB 2 366 305, for example.

In order to provide an adequate sound absorption and reflection, these stationary sound barriers should have a considerable length, extending over the entire section of the runway where airplanes are likely to take off. As the length of runway required varies among types of aircraft and also varies depending on the load of the aircraft, a substantial section of the runway will have to be provided with a sound barrier. It will be clear that this can be very expensive.

If earthworks are used as sound barriers, ICAO (International Civil Aviation Organization) guidelines prescribe a considerable minimum distance from the runway for safety reasons. In addition, the earthworks must have gentle slopes. Such earthworks require a substantial surface area in order to be effective and are therefore very expensive to build, in particular as they require a large surface area and a large quantity of soil.

European Patent Application EP 0 312 396 discloses a sound barrier which can be positioned close to the sound source. This known sound barrier has two positions: a first, folded position in which it can be transported and a second, erected position in which it is used to reduce the perceived noise level of a sound source. In the erected position this known sound barrier is stationary. Using a sound barrier which can be erected near a sound source can be very effective as long as the sound source is stationary. However, this known sound barrier is not effective when the sound source is moving, as is the case when an airplane is accelerating during take-off.

It is an object of the present invention to overcome these and other problems of the Prior Art and to provide a sound barrier which is more effective.

Accordingly, the present invention provides a mobile sound barrier capable of moving along with a moving sound source so as to shield the sound source when moving.

By providing a sound barrier capable of moving together with the sound source, the moving sound source can be shielded locally. This reduces or removes the need to provide stationary sound barriers over the entire path of the sound source. As a result, stationary sound barriers can be omitted or be significantly reduced in size. In addition, by locally shielding the sound source, a more effective reduction of the sound volume is achieved.

The sound source may be an airplane, in which case one or more mobile sound barriers may be installed along, or on the edge of, a runway. Alternatively, the sound source may be a train, in which case the sound barrier(s) may be installed along a section of the railway, for example a section close to a town or village. The present invention may also be used with agricultural implements, such as combine harvesters, or heavy industrial vehicles.

If the sound source is an airplane, the mobile sound barrier can be positioned much closer to the airplane than a stationary sound barrier that has to comply with ICAO and other regulations. As a result, the sound shielding can be much more effective.

It is preferred that the mobile sound barrier is capable of moving at a speed of at least 50 km/h, preferably at least 100 km/h, more preferably at least 150 km/h. By attaining a higher speed, the mobile sound barrier is capable of keeping up with fast-moving sound sources, such as airplanes and trains.

In a preferred embodiment the mobile sound barrier according to the present invention is capable of moving along with an airplane accelerating on a runway until at least a speed of 50 km/h, preferably until at least a speed of 100 km/h, more preferably until lift-off. It will be understood that the lift-off speed varies with the type of airplane and its load. The maximum speed of the mobile sound barrier and the lift-off speed of the airplane together define the length of the runway over which sound protection can be offered by the mobile sound barrier.

The mobile sound barrier of the present invention may further comprise at least one wheel assembly arranged for being guided by a track. This prevents the mobile sound barrier from straying off its intended course.

The dimensions of the mobile sound barrier of the present invention may vary, depending on the particular requirements of the application. In a typical application, the mobile sound barrier may have a length of at least 15 meters and/or a height of at least 3 meters, preferably a length of at least 30 meters and/or a height of at least 5 meters, more preferably a length of at least 40 meters and/or a height of at least 10 meters. It will be understood that a combination of these dimensions is also possible, for example a length of (at least) 15 meters and a height of (at least) 10 meters.

The mobile sound barrier according to the present invention may be self-propelled. In such embodiments, the mobile sound barrier may comprise an electric motor and/or an internal combustion engine, for example. Alternatively, or additionally, the mobile sound barrier may be propelled by traction cables coupled to at least one stationary motor. The stationary motor may be electric or may be an internal combustion engine.

Instead of, or in addition to wheels, the mobile sound barrier of the present invention may be supported by pressurised air or magnetic levitation. In the latter case, the mobile sound barrier of the present invention may advantageously be propelled by a linear electric motor.

In a particularly advantageous embodiment, the mobile sound barrier according to the present invention is arranged for carrying passengers. That is, the mobile sound barrier may comprise seats and/or other arrangements for carrying passengers. This may particularly be useful for people who enjoy the sight of airplanes taking off, such as "plane spotters".

The present invention also provides a sound barrier system, comprising at least one mobile sound barrier as defined above. The sound barrier system of the present invention may further comprise tracks for guiding the at least one mobile sound barrier. These tracks may be constituted by bars or rods, as in railways tracks, or may be constituted by channels or grooves for guiding wheels or other elements of the mobile sound barrier(s). The tracks are preferably shaped so as to avoid catching a wheel of the moving sound source (for example a wheel of the landing gear of an airplane). By avoiding any interference with the sound source, the safety of the mobile sound barrier is enhanced.

The mobile sound barrier may advantageously further comprise a tracking device for tracking the sound source. Such a tracking device allows the mobile sound barrier to determine the relative position of the sound source. Preferably, the mobile sound barrier further comprises a speed adjustment device for adjusting the speed of the mobile sound barrier in response to signals produced by the tracking device. The speed adjustment may involve acceleration or deceleration (braking).

The sound barrier system according to the present invention may further comprise propulsion means for propelling the at least one mobile sound barrier. The propulsion means may, for example, comprise an internal (electric or combustion) motor, an external (electric or combustion) motor coupled with cables or other traction means, or a linear electric motor.

The present invention will further be explained below with reference to exemplary embodiments illustrated in the accompanying drawings, in which:
Fig. 1 schematically shows, in a perspective view, a first arrangement in accordance with the present invention.
Fig. 2 schematically shows, in a cross-sectional view, a first embodiment of a mobile sound barrier in accordance with the present invention.
Fig. 3 schematically shows, in a cross-sectional view, a second embodiment of a mobile sound barrier in accordance with the present invention.
Fig. 4 schematically shows, in a cross-sectional view, an exemplary wheel assembly of a mobile sound barrier in accordance with the present invention.
Fig. 5 schematically shows, in a perspective view, a second arrangement in accordance with the present invention.

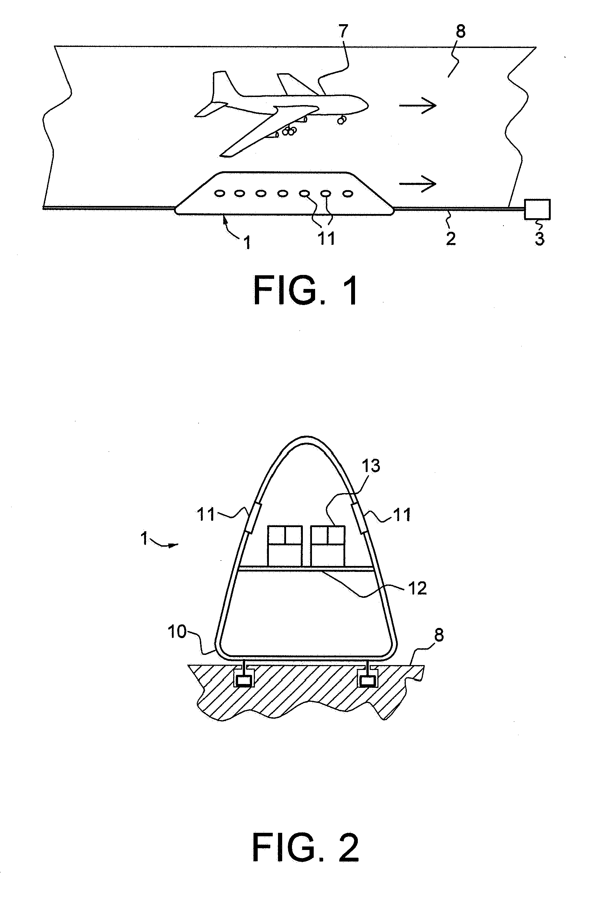

The arrangement shown merely by way of non-limiting example in Fig. 1 comprises a mobile sound barrier 1 according to the present invention alongside a runway 8. A track 2 for guiding the mobile sound barrier 1 extends along the edge of the runway 8. A propulsion unit 3 may be located at one or both ends of the track 2 if the mobile sound barrier 1 is not self-propelled. In the embodiment shown, the mobile sound barrier 1 is arranged for carrying passengers who are able to see an airplane 7 through windows 11.

The exemplary mobile sound barrier 1 is capable of moving in parallel with an airplane over at least part of the length of the runway, thus shielding off the sound produced by the airplane engines. When the airplane 7 is about to take off, it usually stands still on the runway 8. In accordance with the present invention, the mobile sound barrier is moved next to the plane, in particular next to the engines, so as to block the sound produced by the engines. The mobile sound barrier then accelerates as the airplane accelerates, thus remaining essentially stationary relative to the airplane. At lift-off, or sooner if the maximum speed of the mobile sound barrier 1 is reached, the barrier slows down and eventually comes to a standstill. In a preferred embodiment, generators are used to convert the speed (kinetic energy) of the mobile sound barrier into electric energy when decelerating.

Although only a single track 2 and a single mobile sound barrier are shown in Fig. 1, it will be understood that two or more mobile sound barriers may be used at a single runway. Tracks 2 could, for example, be provided at both sides of the runway 8, or multiple tracks could be provided at one or both sides.

The mobile sound barrier 1 may be self-powered. To this end the barrier 1 may be provided with one or more electric motors, internal combustion engines (diesel or petrol), other suitable motor types, or a combination of two or more motor types. An electric motor can advantageously be used as an electric generator upon deceleration of the mobile sound barrier. In conjunction with electric motors, batteries may be used. However, in order to save weight, it is preferred to use an external power supply. To this end, electrical conductors may be incorporated in the tracks 2, while the propulsion unit 3 may contain a battery assembly and/or a power transformer.

The mobile sound barrier 1 may alternatively, or additionally, be externally powered. In such embodiments, the propulsion unit 3 may contain an electric motor and/or an internal combustion engine, while cables connect the mobile sound barrier 1 and the propulsion unit 3. Accordingly, the mobile barrier unit 1 may be pulled by a stationary propulsion unit. The cables are preferably accommodated in the track 2, for example in a special channel or groove provided for this purpose.

In a further alternative embodiment, a linear electric motor is provided. Using technology known *per se* in the field of high-speed trains, the tracks may constitute the "armature" of the linear motor while the mobile sound barrier constitutes the "rotor". In such embodiments, the wheels of the mobile sound barrier may be omitted, although wheels are advantageously provided as a safety measure in case of power failures.

In the merely exemplary embodiment of Fig. 2, the mobile sound barrier 1 is shown to be able to accommodate passengers. To this end, seats 13 are provided inside the body 10. Windows 11 allow passengers to look outside. A floor 12 divides the body in an upper part, where the seats 13 are located, and a lower part, which may be used to accommodate any engines, batteries and other devices.

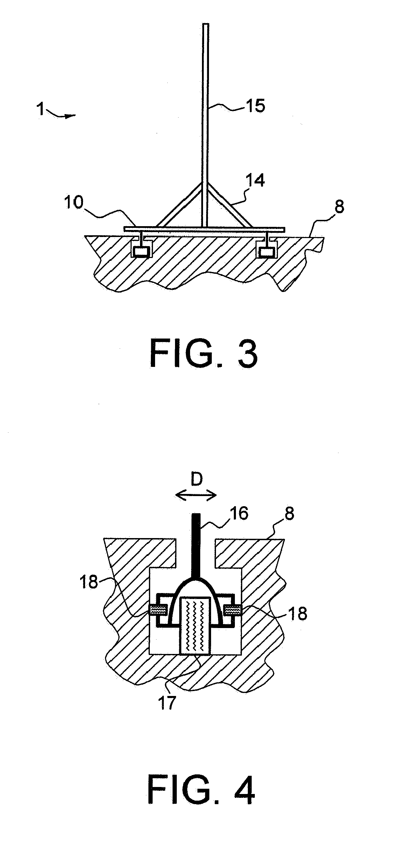

It can be seen that the embodiment of Fig. 2 is provided with wheels which run in channels (corresponding to the track 2 of Fig. 1). The wheels will be discussed later in more detail with reference to Fig. 4. Two channels are shown, but in some embodiments a third channel may be present to accommodate a traction cable.

The embodiment of Fig. 2 has a rounded triangular cross-sectional shape. This particular shape reduces its sensitivity to side winds. However, it will be understood that other shapes are also possible.

The merely exemplary embodiment of Fig. 3 is not suitable for carrying passengers. In this economical embodiment the body 10 consists of a base, on which a wall member 15 is mounted. Support members 14 reinforce the resulting structure.

The dimensions of the mobile sound barrier 1 may vary, depending on the particular application and location of use. Preferred dimensions encompass a length of a length of at least 5 meters, but it is preferred for the length to measure at least 15, 30, 40 or even 50 meters. The height may measure at least 2 meters, but is preferably at least 3, 4, 5 or at least 9 or 10 meters. Any suitable combination of length and height may be used.

The mobile sound barrier 1 of the present invention preferably comprises a tracking unit or tracking device for tracking the (relative) position of the sound source. The tracking unit may comprise one or more cameras and/or one or more microphones to determine the (relative) position (e.g. the angle and/or distance) of the sound source. The cameras may advantageously be IR (infra-red) cameras. Alternatively, or additionally, the tracking unit may use a laser beam, a transponder located in the sound source, and/or other suitable means.

In a preferred embodiment, the mobile sound barrier comprises a speed adjustment device for adjusting the speed of the mobile sound barrier in response to signals produced by the tracking device. The speed adjustment may involve acceleration or deceleration (braking). Accordingly, the preferred embodiment also comprises brakes. In addition to disc brakes, drum brakes and/or other types of brakes, generators may be used for braking while converting the speed of the mobile sound barrier into electric energy.

In particular, the speed adjustment device may be arranged for applying the brakes (or using the engines to accelerate) if the signals produced by the tracking unit(s) indicate that the sound source deviates from its intended trajectory and approaches the mobile sound barrier.

A merely exemplary embodiment of a wheel and channel arrangement is schematically illustrated in Fig. 4. A channel (comprised in the track 2 of Fig. 1) provided in the runway 8 is shown to have a relatively narrow opening so as to prevent the wheels of an airplane or vehicle to become engaged. For this reason, the width D of the opening is smaller than the width of the channel.

A support shaft 16 of the wheel arrangement extends through the relatively narrow opening of the channel. The wheel arrangement is shown to comprise a main wheel 17 for supporting the mobile sound barrier, and side wheels 18 to guide the wheel arrangement in the channel. It will be understood that other wheel arrangements may also be used.

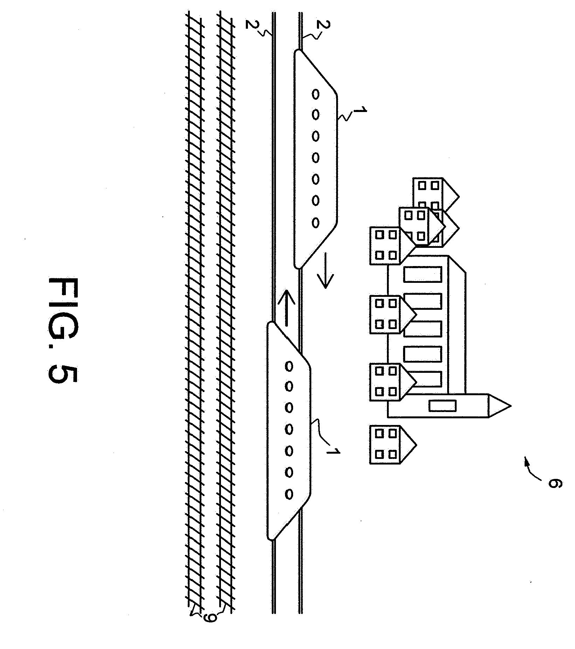

While the sound barrier system of Fig. 1 is arranged to shield off sound produced by airplanes, the sound barrier system of Fig. 5 is arranged to shield off sound produced by trains and thus reduce the sound perceived by the inhabitants of a village 6. Railway tracks 9 pass the village at a relatively small distance and the noise produced by trains will be clearly audible in the village. For this reason, a pair of tracks 2 has been laid to enable mobile sound barriers 1 to be used. When a train approaches, a mobile sound barrier 1 is brought up to speed so as to match the speed of the train when the train reaches the village. Then the mobile sound barrier moves together with the train past the village, thus shielding off the train. As trains may simultaneously pass in either direction on the pair of train tracks 9, a pair of tracks 2 has been provided to allow two mobile sound barriers to operate simultaneously.

The mobile sound barriers of the system of Fig. 5 comprise a tracking device which controls the speed of the mobile sound barriers so as to move along (side by side) with the trains. Alternatively, or additionally, a central tracking system located outside the mobile sound barriers may be provided.

The present invention is based upon the insight that a moving sound barrier is capable of locally shielding a sound source, and therefore reduces or removes the need for a sound barrier which extends along the length of the path of the sound source.

It is noted that any terms used in this document should not be construed so as to limit the scope of the present invention. In particular, the words "comprise(s)" and "comprising" are not meant to exclude any elements not specifically stated. Single elements may be substituted with multiple elements or with their equivalents.

It will be understood by those skilled in the art that the present invention is not limited to the embodiments illustrated above and that many modifications and additions may be made without departing from the scope of the invention as defined in the appending claims.

## Claims

1. A mobile sound barrier (1) capable of moving along with a moving sound source (7) so as to shield the sound source when moving.

2. The mobile sound barrier according to claim 1, which is capable of moving at a speed of at least 50 km/h, preferably at least 100 km/h, more preferably at least 150 km/h.

3. The mobile sound barrier according to claim 1 or 2, which is capable of moving along with an airplane (7) accelerating on a runway (8) until at least a speed of 50 km/h, preferably until at least a speed of 100 km/h, more preferably until lift-off.

4. The mobile sound barrier according to claim 1, 2 or 3, further comprising at least one wheel assembly (16, 17, 18) arranged for being guided by a track (2).

5. The mobile sound barrier according to any of the preceding claims, which has a length of at least 15 meters and/or a height of at least 3 meters, preferably a length of at least 30 meters and/or a height of at least 5 meters, more preferably a length of at least 40 meters and/or a height of at least 10 meters.

6. The mobile sound barrier according to any of the preceding claims, which is self-propelled.

7. The mobile sound barrier according to any of claims 1-6, which is propelled by traction cables coupled to at least one stationary motor.

8. The mobile sound barrier according to any of claims 1-6, which is propelled by a linear electric motor.

9. The mobile sound barrier according to any of the previous claims, which is arranged for carrying passengers.

10. The mobile sound barrier according to any of the previous claims, further comprising a tracking device for tracking the sound source (7).

11. The mobile sound barrier according to claim 10, further comprising a speed adjustment device for adjusting the speed of the mobile sound barrier in response to signals produced by the tracking device.

12. A sound barrier system, comprising at least one mobile sound barrier (1) according to any of the preceding claims.

13. The sound barrier system according to claim 12, further comprising tracks (2) for guiding the at least one mobile sound barrier (1).

14. The sound barrier system according to claim 12 or 13, wherein the tracks (2) are shaped so as to avoid catching a wheel of the moving sound source (7).

15. The sound barrier system according to claim 12, 13 or 14, further comprising propulsion means (3) for propelling the at least one mobile sound barrier (1).
